# EUROPEAN PATENT SPECIFICATION

(11) **EP 3 999 917 B1**
(45) Date of publication and mention of the grant of the patent: **02.08.2023**
(21) Application number: 19809722.2
(22) Date of filing: 07.11.2019
(51) Int. Cl.: G05B 19/042

(54) **METHOD AND SYSTEM FOR GENERATING A DIGITAL REPRESENTATION OF ASSET INFORMATION IN A CLOUD COMPUTING ENVIRONMENT**
VERFAHREN UND SYSTEM ZUR ERZEUGUNG EINER DIGITALEN DARSTELLUNG VON GERÄTEINFORMATIONEN IN EINER CLOUD-COMPUTING-UMGEBUNG
PROCÉDÉ ET SYSTÈME DE GÉNÉRATION DE REPRÉSENTATION NUMÉRIQUE D'INFORMATIONS DE DISPOSITIFS DANS UN ENVIRONNEMENT INFORMATIQUE EN NUAGE

(30) Priority: 21.08.2019 RO 201900508
(43) Date of publication of application: 25.05.2022
(73) Proprietor: Siemens Aktiengesellschaft, 80333 München (DE)
(72) Inventor: BARKO, Gyorgy Petru, 500403 Brasov (RO); HUBAUER, Thomas, 85748 Garching bei München (DE); JOSHI, Janaki, Bengaluru 560100 (IN); KUMAR, Naveen, Bangalore 560100 (IN)
(74) Representative: Horn Kleimann Waitzhofer Patentanwälte PartG mbB
(86) International application number: PCT/EP2019/080528
(87) International publication number: WO 2021/032310

(56) References cited:
- EP-A1- 3 070 550
- US-A1- 2018 335 907
- US-A1- 2019 138 662

## Description

The present invention relates to technical systems and more particularly relates to a method and system for generating digital representation of asset information in a cloud computing environment.

Digital twins (DT) as a digital virtual representation of a physical industrial system have proven to be a key element in industrial digitalization. A physical industrial system may comprise a plurality of assets deployed. Each of these assets comprises related information, referred herein as 'asset information'. Generally, different types of digital twins are generated based on type of use cases required for the real-time industrial system. For example, the different types of digital twin comprise a structure twin, a service twin, operations twin, and so on. Typically, the digital twin for an industrial system is built as a central building block to serve multiple use cases of the industrial system. One of the major challenges while building the digital twin is the integration of asset information from various data sources. Conventionally, each data source may expose different data schemas, thereby making the asset information specific to the data sources using them. This shows that the asset information from one data source may not be compatible with the asset information of the other data source. Therefore, asset information distribution and integration to generate automatically a digital twin is a concern.

Further, an engineer handling the asset information stored in a specific data source may use a different tool than the other engineer handling the asset information stored in other data source. Hence, there is a large dependency on type of tools used to handle same asset information across different data sources.

Until now, two main strategies have been employed to build the digital twins. Firstly, for structured asset information, a standard approach referred as "classical" data integration approach using relational database systems (RDBMS) is used. However, such classical data approach is a tedious process due to the rigid schemas used in RDBMS which in turn require full upfront specification of the target schema. Further, such a classical data integration approach requires complex mappings between source and target schemata. Secondly, for unstructured asset information, human domain experts need to manually go through a large number of documents and collate information from them. This existing approach is time-consuming, and heavily dependent on the engineer expertise and experience in handling such unstructured asset information. This also amounts to human error while integrating such unstructured asset information and building a suitable digital twin.

US 2018/0335907 A1 discloses an extensible graphical editor for asset modeling. US 2019/0138662 A1 discloses programmatic behaviors of a contextual digital twin. EP 3 070 550 A1 relates to modeling of an industrial automation environment in the cloud.

In the light of the above, there is a need for a method and system for generating digital representation of asset information in a cloud computing environment.

Therefore, it is an object of the present invention to provide a method and system for generating digital representation of asset information in a cloud computing environment.

The object of the present invention is achieved by a method for generating digital representation of asset information in a cloud computing environment. The method comprises extracting asset information associated with one or more assets from a plurality of structured and unstructured data sources. The one or more assets are deployed in an industrial environment. The asset information comprises asset design and maintenance information, asset configuration information, asset physical block information, test data set, asset alarms and the like. In an embodiment, the asset comprises servers, robots, switches, automation devices, programmable logic controllers (PLC)s, human machine interfaces (HMIs), input output modules, motors, valves, pumps, actuators, sensors and other industrial equipment(s).

The method comprises processing the extracted asset information based on a first predefined set of rules. The first predefined set of rules comprises, among others, configuration and part supersede information, generic (e.g. a bill of material of an equipment forms a tree) and domain-specific (a turbine of make "A" must have exactly 8 top-level sub-structures called modules) structure requirements, but also requirements relevant to the intended use of the data (e.g. all serialized components must have measurement point information).

The method comprises generating a digital representation of the processed asset information based on plurality of user devices. In an embodiment, the digital representation of the processed asset information may be a digital twin of the one or more assets. Specifically, the digital representation of the processed asset information may be a digital twin knowledge graph. In an exemplary embodiment, the digital representations are generated using the SPARQL/SPARUL data query and modification languages of the W3C stack and stored using the named graph feature of the W3C stack. Therefore, the digital representation generated may be virtually subdivided into graphs representing, for example, sources or various intermediate representations of a digital twin associated with the one or more asset (s). By keeping track of the digital representations, corresponding asset information, and also the dependencies between the digital representations, only affected parts of the digital representations are rebuilt when corresponding asset information is modified. Therefore, amount of changes (made in runtime) required in case of partial updates to asset information is minimized.

The method further comprises storing the generated representation of the processed asset information in a predefined file format in a database. The predefined file format is compatible with a format used by plurality of user devices. Additionally, the method comprises outputting the generated digital representation of the processed asset information on a user interface of the plurality of user devices.

In a preferred embodiment, in extracting the asset information from the plurality of structured and unstructured data sources, the method comprises receiving asset information from plurality of structured and unstructured data sources. Further, the method comprises identifying relevant asset information among the received asset information based on content of the asset information. The content of the asset information comprises, among others, engine serial numbers, module serial numbers, material numbers, and document identifiers. Furthermore, the method comprises extracting the identified relevant asset information.

According to the invention, in processing the extracted asset information based on the first predefined set of rules, the method comprises determining whether the extracted asset information meets a predefined requirement based on execution of one or more tests on the asset information. The predefined requirement comprises data structure requirement, content integrity requirement, receipt from valid data source authorized to store/access asset information and the like. The one or more tests may comprise queries that return a non-empty result whenever a specific rule is violated by a generated (intermediate) structure, with the query result indicating the sub-structure that violates the rule. Such rules can be implemented, among others, using the SPARQL or SHACL languages of the W3C Semantic Web stack. Further, the method comprises processing the asset information which is determined to meet the predefined requirement. In case the asset information fails to meet the predefined requirement, the method comprises either discarding the asset information, or generating a digital twin on a "best effort" basis while notifying the user of the user device about the issues detected in the underlying asset information.

In another preferred embodiment, in processing the extracted asset information based on the first predefined set of rules, the method comprises classifying the extracted asset information based on the content of the asset information and based on a second predefined set of rules. The second predefined set of rules comprises rules that specify how certain modifications that can be embodied in a turbine affect its bill of material and equipment. Further, the method comprises dynamically mapping the classified asset information with corresponding asset information extracted from other structured and unstructured data sources.

In another preferred embodiment, in generating the digital representation of the processed asset information based on the type of user devices, the method comprises generating a common data model based on the dynamically mapped asset information. The common data model corresponds to a common file format compatible with the format used by the plurality of user devices. Further, the method comprises determining type of user devices intended to receive the digital representation of the processed asset information. The type of user devices comprises application-based user devices, for example, electrical engineering application, mechanical engineering application, automation engineering application, service management application and the like. The method comprises generating the digital representation of the processed asset information based on the generated common data model and based on the determined type of user devices.

In yet another preferred embodiment, in generating the digital representation of the processed asset information based on the type of user devices, the method comprises generating a graphical representation of the processed asset information based on the type of user devices.

In yet another preferred embodiment, in generating the digital representation of the processed asset information based on the type of user devices, the method comprises classifying the generated common data model into sub-common data models based on the classified asset information. The sub-common data models comprise, among others, a bill-of-material (BOM) model, a measurement data model (including measurement points and measurement readings), a modifications data model, and others. Further, the method comprises generating one or more graphical representations of the processed asset information. Each of the one or more graphical representations corresponds to each of the sub-common data model.

In a preferred embodiment, in processing the extracted asset information based on the first predefined set of rules, the method comprises determining one or more modifications made to the extracted asset information based on pre-stored asset information. The one or more modifications comprises any change in the asset information. For example, addition of any information, deletion of any information, update or change to any parameter of the asset. Any parameter of the asset may include configuration parameter, device specific parameter, asset ID, version number, network information and the like.

In another preferred embodiment, in generating the digital representation of the processed asset information based on the type of user devices, the method comprises generating a part of the representation of the processed asset information based on the determined one or more modifications made to the asset information. The part of representation corresponds to the modified part of the asset information.

In yet another preferred embodiment, the method comprises performing one or more validity tests on the generated digital representation of the asset information. The one or more validity tests comprises for example, checking whether serial numbers are unique for a given material across the fleet, or validating that the bill of material forms a proper tree structure with unique identifiers for all nodes. Also, the one or more validity tests may comprise test that the structure of the tree may not be deeper that a number n of levels, that no outdated materials are used in the most recent structure, that all used materials are known to the fleet-wide backbone systems (e.g. SAP), and more. Further, the method comprises modifying the generated digital representation of the asset information based on the validation results. The validation results comprise a success or failure state of the digital representation. A success state indicates that the digital representation contains no error logs or faults. A failure state indicates that the digital representation comprises error logs or faults. In case if the validation results indicate failure state, then a notification/alert message is displayed in the user interface of the user devices indicating the failure state of the digital representation.

The object of the present invention is also be achieved by a cloud computing system for generating digital representation of asset information in a cloud computing environment. The cloud computing system may comprise one or more processors and a memory coupled to the one or more processors. The memory comprises a digital representation management module stored in the form of machine-readable instructions and executable by the one or more processors. The digital representation management module is configured for performing the method described above.

The object of the present invention is also achieved by a cloud computing environment. The cloud computing environment comprising a cloud computing system, an industrial environment comprising one or more assets capable of communicating asset information associated with the one or more assets to the cloud computing system. The cloud computing environment further comprises one or more structured and unstructured data sources capable of storing information associated with the one or more assets in one or more data format. The cloud computing environment further comprises at least one user device communicatively coupled to the cloud computing system and the industrial environment via the network.

The object of the present invention is also achieved by a computer-program product having machine-readable instructions stored therein, that when executed by one or more processor(s), cause the one or more processor (s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment capable of generating digital representations of asset information, according to an embodiment of the present invention;
- FIG 2: is a block diagram of cloud computing system, such as those shown in FIG 1, in which an embodiment of the present invention can be implemented;
- FIG 3: is a block diagram of digital representation management module, such as those shown in FIG 1 and FIG 2, in which an embodiment of the present invention can be implemented; and
- FIG 4: is a process flowchart illustrating an exemplary method of generating digital representation of asset information in a cloud computing environment, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

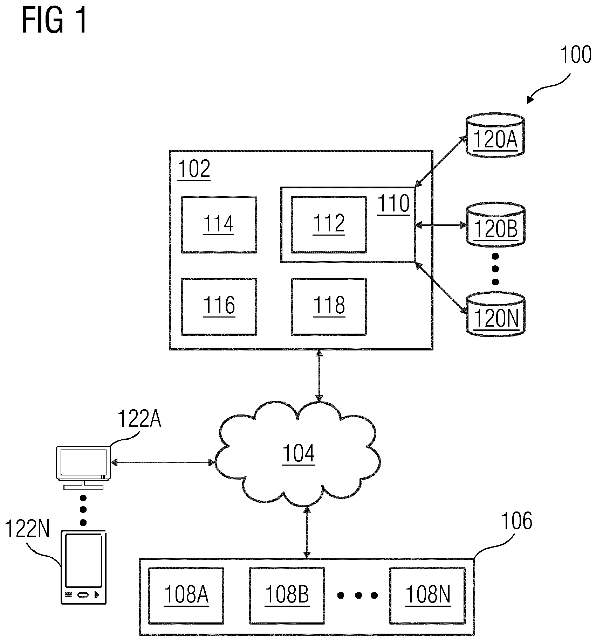

FIG 1 is a schematic representation of a cloud computing environment 100 capable of generating digital representation of asset information, according to an embodiment of the present invention. Particularly, FIG 1 depicts a cloud computing system 102 which is capable of delivering cloud applications for managing an industrial environment 106 comprising one or more asset(s) 108A-N. As used herein, "cloud computing environment" refers to a processing environment comprising configurable computing physical and logical resources, for example, networks, servers, storage, applications, services, etc., and data distributed over the cloud platform. The cloud computing environment 100 provides on-demand network access to a shared pool of the configurable computing physical and logical resources.

The cloud computing system 102 is connected to one or more asset(s) 108A-N in the industrial environment 106 via a network 104 (e.g., Internet). The one or more asset(s) 108A-N may include servers, robots, switches, automation devices, programmable logic controllers (PLC) s, human machine interfaces (HMIs), input output modules, motors, valves, pumps, actuators, sensors, gas turbines, and other industrial equipment (s). The cloud computing system 102 may be a public cloud, a private cloud, and/or a hybrid cloud configured to provide dedicated cloud services to its users. Although, FIG 1 illustrates the cloud computing system 102 connected to one industrial environment 106 via the network 104, one skilled in the art can envision that the cloud computing system 102 can be connected to several industrial environment 106 located at different locations via the network 104.

Further, the cloud computing system 102 is also connected to user devices 122A-N via the network 104. The user devices 122A-N can access the cloud computing system 102 for automatically generating digital representations of the asset information. In an embodiment, the user devices 122A-N comprises an engineering system capable of running an industrial automation application. The user devices 122A-N can be a laptop computer, desktop computer, tablet computer, smartphone and the like. The user devices 122A-N can access cloud applications (such as enabling users to generate digital representations of the asset information based on user requirement) via a web browser. Further, the users are provided a quick option to download the digital representations from cloud platform 110 to directly into their Simulation Software running in the user devices 122A-N. Further, the user devices 122A-N may install a plug-in for accessing digital representations of asset information on the cloud computing system 102 via different simulation software running on the user devices 122A-N.

The cloud computing system 102 comprises a cloud platform 110, a digital representation management module 112, a server 114 including hardware resources and an operating system (OS), a network interface 116, one or more structured and unstructured data sources 120A-N and application program interfaces (APIs) 118. The network interface 116 enables communication between the cloud computing system 102, the industrial environment 106, and the user device(s) 122A-N. The cloud interface (not shown in FIG 1) may allow the engineers at the one or more user device (s) 122A-N to access digital representations stored at the cloud computing system 102 and perform one or more actions on the digital representations as same instance. The server 114 may include one or more servers on which the OS is installed. The servers 114 may comprise one or more processors, one or more storage devices, such as, memory units, for storing data and machine-readable instructions for example, applications and application programming interfaces (APIs) 118, and other peripherals required for providing cloud computing functionality. The cloud platform 110 is a platform which enables functionalities such as data reception, data processing, data rendering, data communication, etc. using the hardware resources and the OS of the servers 114 and delivers the aforementioned cloud services using the application programming interfaces 118 deployed therein. The cloud platform 110 may comprise a combination of dedicated hardware and software built on top of the hardware and the OS.

The one or more structured and unstructured data sources 120A-N is configured for storing information associated with the one or more assets 108A-N in one or more data format. The one or more structured and unstructured data sources 120A-N is, for example, a structured query language (SQL) data store or a not only SQL (NoSQL) data store. The one or more structured and unstructured data sources 120A-N is configured as cloud-based database implemented in the cloud computing environment 100, where computing resources are delivered as a service over the cloud platform 110. The one or more structured and unstructured data sources 120A-N, according to another embodiment of the present invention, is a location on a file system directly accessible by the digital representation management system 112. In another embodiment, the one or more structured and unstructured data sources 120A-N may be external data sources each having different schema and different file formats. The one or more structured and unstructured data sources 120A-N is configured to store asset information, asset parameters, digital representations associated with the asset information, error logs, validation results, abnormalities associated with the asset 122A-N, common data models, sub-data models, behavior trends, and the like. The one or more structured and unstructured data sources 120A-N also maintains versions of the digital representations.

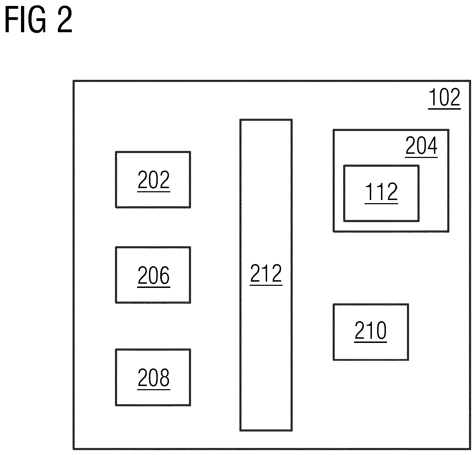

FIG 2 is a block diagram of a cloud computing system 102, such as those shown in FIG 1, in which an embodiment of the present invention can be implemented. In FIG 2, the cloud computing system 102 includes a processor(s) 202, an accessible memory 204, a storage unit 206, a communication interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor (s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor (s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes a digital representation management module 112 stored in the form of machine-readable instructions on any of the above-mentioned storage media and may be in communication with and executed by the processor(s) 202.

When executed by the processor(s) 202, the digital representation management module 112 causes the processor(s) 202 to generate digital representations of asset information in a cloud computing environment 100. In an embodiment, the digital representation management module 112 causes the processor(s) 202 to extract asset information associated with one or more assets 122A-N from plurality of structured and unstructured external data sources 120A-N. The one or more assets 122A-N are deployed in an industrial environment 106. The asset information comprises asset design and maintenance information, asset configuration information, asset physical block information, test data set, asset alarms and the like. In an embodiment, the asset information from the plurality of structured and unstructured external data sources 120A-N is extracted by receiving asset information from plurality of structured and unstructured external data sources 120A-N and identifying relevant asset information among the received asset information based on content of the asset information. Further, the identified relevant asset information is extracted.

Further, the digital representation management module 112 causes the processor(s) 202 to process the extracted asset information based on a first predefined set of rules. The first predefined set of rules comprises, among others, configuration and part supersede information, generic (e.g. a bill of material of an equipment forms a tree) and domain-specific (a turbine of make "A" must have exactly 8 top-level sub-structures called modules) structure requirements, but also requirements relevant to the intended use of the data (e.g. all serialized components must have measurement point information).

In an embodiment, in processing the extracted asset information based on the first predefined set of rules, the digital representation management module 112 causes the processor(s) 202 to determine whether the extracted asset information meets a predefined requirement based on execution of one or more tests on the asset information. The predefined requirement comprises data structure requirement, content integrity requirement, receipt from valid data source authorized to store/access asset information and the like. The one or more tests may comprise queries that return a non-empty result whenever a specific rule is violated by a generated (intermediate) structure, with the query result indicating the sub-structure that violates the rule. Such rules can be implemented, among others, using the SPARQL or SHACL languages of the W3C Semantic Web stack. Further, the digital representation management module 112 causes the processor(s) 202 to process the asset information which is determined to meet the predefined requirement. If the asset information fails to meet the predefined requirement, then the asset information is discarding from the one or more structured and unstructured data sources 120A-N.

In another embodiment, in processing the extracted asset information based on the first predefined set of rules, the digital representation management module 112 causes the processor(s) 202 to classify the extracted asset information based on the content of the asset information and based on a second predefined set of rules. The content of the asset information comprises, among others, engine serial numbers, module serial numbers, material numbers, and document identifiers. The second predefined set of rules comprises rules that specify how certain modifications that can be embodied in a turbine affect its bill of material and equipment. In another embodiment, the second predefined set of rules comprises rules to determine whether a component should be replaced on the next maintenance due to fleet-based models, or rules that confirm configuration changes against configuration management data. Further, the digital representation management module 112 causes the processor(s) 202 to dynamically map the classified asset information with corresponding asset information extracted from other external structured and unstructured data sources 120A-N. In an exemplary embodiment, knowledge graph technology is used for dynamically mapping the classified asset information with corresponding asset information extracted from other external structured and unstructured data sources 120A-N. Knowledge graphs provide "schema on read" capabilities. Due to this capability, the cloud computing system 102 efficiently handles asset information extraction and integration in the context of heterogeneous and potentially changing data source (such as data sources 120A-N) schemas. Further, Knowledge graphs expose different schemas for the same underlying knowledge graph (which is the digital representation), thereby meeting the needs of different consumer systems. Despite this flexibility, Knowledge Graphs (at least if expressed using the RDF formalism) has formalized and standardized syntax and semantics. This makes the chosen approach largely independent of concrete tools and allows for an easy extension/integration with other systems or twins.

In yet another embodiment, in processing the extracted asset information based on the first predefined set of rules, the digital representation management module 112 causes the processor(s) 202 to determine one or more modifications made to the extracted asset information based on pre-stored asset information. The one or more modifications comprises any change in the asset information. For example, addition of any information, deletion of any information, update or change to any parameter of the asset. Any parameter of the asset may include configuration parameter, device specific parameter, asset ID, version number, network information and the like.

Further, the digital representation management module 112 causes the processor(s) 202 to generate a digital representation of the processed asset information based on plurality of user devices. In an embodiment, in generating a digital representation of the processed asset information based on plurality of user devices, the digital representation management module 112 causes the processor(s) 202 to generate a common data model based on the dynamically mapped asset information. The common data model corresponds to a common file format compatible with the format used by plurality of user devices 122A-N. Further, the digital representation management module 112 causes the processor(s) 202 to determine type of user devices 122A-N intended to receive the digital representation of the processed asset information and generate the digital representation of the processed asset information based on the generated common data model and based on the determined type of user devices 122A-N.

In another embodiment, in generating the digital representation of the processed asset information based on the type of user devices 122A-N, the digital representation management module 112 causes the processor(s) 202 to generate a graphical representation of the processed asset information based on the type of user devices 122A-N.

In yet another embodiment, in generating the digital representation of the processed asset information based on the type of user devices 122A-N, the digital representation management module 112 causes the processor(s) 202 to classify the generated common data model into sub-common data models based on the classified asset information and generate one or more graphical representations of the processed asset information. Each of the one or more graphical representations corresponds to each of the sub-common data model.

In yet another embodiment, in generating the digital representation of the processed asset information based on the type of user devices 122A-N, the digital representation management module 112 causes the processor(s) 202 to generate a part of the representation of the processed asset information based on the determined one or more modifications made to the asset information. The part of representation corresponds to the modified part of the asset information. In an exemplary embodiment, modifications are performed within the digital representation as part of the SPARQL/SPARUL queries.

Furthermore, the digital representation management module 112 causes the processor(s) 202 to store the generated representation of the processed asset information in a predefined file format in a database of the cloud computing system 102. The predefined file format is compatible with a format used by the plurality of user devices 122A-N.

Additionally, the digital representation management module 112 causes the processor(s) 202 to output the generated digital representation of the processed asset information on a user interface of the plurality of user devices 122A-N.

Moreover, the digital representation management module 112 causes the processor(s) 202 to perform one or more validity tests on the generated digital representation of the asset information and modify the generated digital representation of the asset information based on the validation results.

The storage unit 206 is configured for storing the asset data blocks associated with one or more asset(s).

The communication interface 208 is configured for establishing communication sessions between the one or more user device 122AN and the cloud computing system 102. The communication interface 208 allows the one or more engineering applications running on the user devices 122A-N to import/export digital representations into the cloud computing system 102. In an embodiment, the communication interface 208 interacts with the interface at the user devices 122A-N for allowing the engineers to access the digital representations of the asset information and perform one or more actions on the digital representations stored in the cloud computing system 102.

The input-output unit 210 may include input devices a keypad, touch-sensitive display, camera (such as a camera receiving gesture-based inputs), etc. capable of receiving one or more input signals, such as user commands to process asset data.

Also, the input-output unit 210 may be a display unit for displaying a graphical user interface which visualizes the asset data and also displays the status information associated with each set of actions performed on the asset data. The set of actions may include data entry, data modification or data display. The bus 212 acts as interconnect between the processor 202, the memory 204, the storage unit 206 and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a cloud computing system 102 as is unique to the present disclosure or necessary for an understanding of the present disclosure is depicted and described. The remainder of the construction and operation of the cloud computing system 102 may conform to any of the various current implementation and practices known in the art.

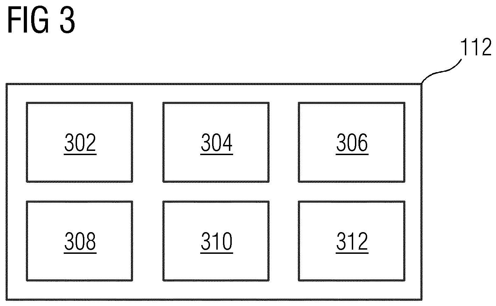

FIG 3 is a block diagram of a digital representation management module 112, such as those shown in FIG 1 and FIG 2, in which an embodiment of the present invention can be implemented. The digital representation management module 112 comprises a data extraction module 302, data processing module 304, digital representation generation module 306, a database 308, an output module 310 and a data validation module 312.

The data extraction module 302 is configured for extracting asset information associated with one or more assets 122A-N from plurality of structured and unstructured external data sources 12-A-N. The one or more assets 122A-N are deployed in an industrial environment 106. The asset information comprises asset design and maintenance information, asset configuration information, asset physical block information, test data set, asset alarms and the like. The asset information may be extracted using graph queries (e.g. SPARQL or another graph query language).

Specifically, the data extraction module 302 is configured for receiving asset information from plurality of structured and unstructured external data sources 120A-N. Further, the data extraction module 302 is configured for identifying relevant asset information among the received asset information based on content of the asset information. The content of the asset information comprises engine serial numbers, module serial numbers, material numbers, and document identifiers. Furthermore, the data extraction module 302 is configured for extracting the identified relevant asset information. The identified relevant asset information is then provided to the data processing module 304.

The data processing module 304 is configured for processing the extracted asset information based on a first predefined set of rules.

The first predefined set of rules comprises, among others, configuration and part supersede information, generic (e.g. a bill of material of an equipment forms a tree) and domain-specific (a turbine of make "A" must have exactly 8 top-level sub-structures called modules) structure requirements, but also requirements relevant to the intended use of the data (e.g. all serialized components must have measurement point information).

Specifically, the data processing module 304 is configured to classify the extracted asset information based on the content of the asset information and based on a second predefined set of rules. The second predefined set of rules comprises rules that specify how certain modifications that can be embodied in a turbine affect its bill of material and equipment. In another embodiment, the second predefined set of rules comprises rules to determine whether a component should be replaced on the next maintenance due to fleet-based models, or rules that confirm configuration changes against configuration management data. Further, the data processing module 304 is configured for dynamically mapping the classified asset information with corresponding asset information extracted from other external structured and unstructured data sources 120A-N. For example, the mapping is performed in order to build a look up table. Such look up table comprises mapped asset information for each of the one or more assets 122A-N. For example, an asset A has asset information such as asset ID, asset type, asset configuration information, asset communication information, asset faults, asset current status and the like. Hence, the look up comprises each of the above information of the asset mapped to asset A. Such processed asset information and/or the lookup table is then provided to the digital representation generation module 206.

Further, the data processing module 304 is configured for determining one or more modifications made to the extracted asset information based on pre-stored asset information. The one or more modifications comprises any change in the asset information. For example, addition of any information, deletion of any information, update or change to any parameter of the asset. Any parameter of the asset may include configuration parameter, device specific parameter, asset ID, version number, network information and the like.

The digital representation generation module 206 is configured for generating a digital representation of the processed asset information based on plurality of user devices. The digital representation of the processed asset information comprises a digital twin model of the asset, such as assets 108A-N. In an exemplary embodiment, the digital representation of the processed asset information is a knowledge graph based digital twin model virtually representing the physical asset, such as assets 108A-N deployed in the industrial environment 106. Specifically, upon receiving the processed asset information, the digital representation generation module 206 is configured for generating a common data model based on the dynamically mapped asset information. The common data model corresponds to a common file format compatible with the format used by plurality of user devices 122A-N. Further, the digital representation generation module 206 is configured for determining type of user devices 122A-N intended to receive the digital representation of the processed asset information. Additionally, the digital representation generation module 206 is configured for generating the digital representation of the processed asset information based on the generated common data model and based on the determined type of user devices 122A-N. In an exemplary embodiment, the digital representation generation module 206 is configured for generating a graphical representation of the processed asset information based on the type of user devices 122A-N.

Further, the digital representation generation module 206 is configured for classifying the generated common data model into sub-common data models based on the classified asset information. Further, the digital representation generation module 206 is configured for generating one or more graphical representations of the processed asset information. Each of the one or more graphical representations corresponds to each of the sub-common data model.

Furthermore, the digital representation generation module 206 is configured for generating a part of the representation of the processed asset information based on the determined one or more modifications made to the asset information. The part of representation corresponds to the modified part of the asset information.

The database 308 is configured for storing the generated representation of the processed asset information in a predefined file format. The predefined file format is compatible with a format used by the plurality of user devices 122A-N.

The output module 310 is configured for outputting the generated digital representation of the processed asset information on a user interface of the plurality of user devices 122A-N. In an embodiment, the generated digital representation of the processed asset information is displayed/rendered to the users of the user devices 122A-N using the W3C stack. This stack provides standard semantics for operators, and dedicated components (inference engines) which may be used to add additional information associated with the asset 108A-N. For example, using inference, additional, specific information (e.g. type labels) may be added on nodes based on user-defined rules. This helps domain experts get a better understanding of the asset information outputted on the user devices 122A-N, without having them to specify this information manually on each information item.

The data validation module 312 is configured for determining whether the extracted asset information meets a predefined requirement based on execution of one or more tests on the asset information. The predefined requirement comprises data structure requirement, content integrity requirement, receipt from valid data source authorized to store/access asset information and the like. The one or more tests may comprise queries that return a non-empty result whenever a specific rule is violated by a generated (intermediate) structure, with the query result indicating the sub-structure that violates the rule. Such rules can be implemented, among others, using the SPARQL or SHACL languages of the W3C Semantic Web stack. Further, the data validation module 312 is configured for send the asset information to the data processing module 304 if the asset information is determined to meet the predefined requirement. If the asset information fails to meet the predefined requirement, then the data validation module 312 is configured for discarding the asset information. In an embodiment, RDF-based technology stack is used to perform automated data quality validation and scripted exports in a plurality of export formats. In another example, data validation is implemented using a graph query language, or some related formalism (e.g. SHACL).

Further, the data validation module 312 is configured for performing one or more validity tests on the generated digital representation of the asset information. The one or more validity tests comprises for example, checking whether serial numbers are unique for a given material across the fleet, or validating that the bill of material forms a proper tree structure with unique identifiers for all nodes. Also, the one or more validity tests may comprise test that the structure of the tree may not be deeper that a number n of levels, that no outdated materials are used in the most recent structure, that all used materials are known to the fleet-wide backbone systems (e.g. SAP), and more. Further, the data validation module 312 is configured for modifying the generated digital representation of the asset information based on the validation results. The validation results comprise a success or failure state of the digital representation. A success state indicates that the digital representation contains no error logs or faults. A failure state indicates that the digital representation comprises error logs or faults. In case if the validation results indicate failure state, then a notification/alert message is displayed in the user interface of the user devices indicating the failure state of the digital representation.

Specifically, the data validation module 312 analyzes results of validation of the asset information. If the results of validation are successful, the digital representations generated are outputted via the output module 310. If in case the validation results are unsuccessful, error log files associated with the digital representation are generated and displayed on a user interface of the user device 122A-N.

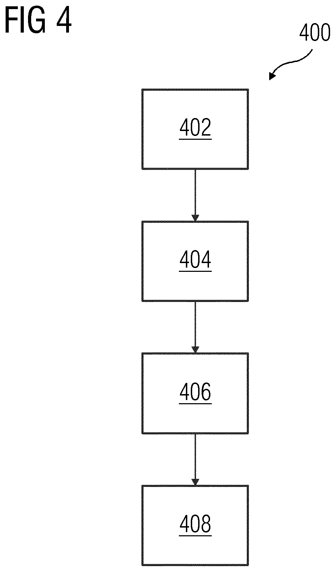

FIG 4 is a process flowchart illustrating an exemplary method 400 of generating digital representations of asset information in a cloud computing environment 100, according to an embodiment of the present invention. At step 402, asset information associated with one or more assets 122A-N is extracted from plurality of structured and unstructured external data sources 120A-N. The one or more assets 122A-N are deployed in an industrial environment 106. At step 404, the extracted asset information is processed based on a first predefined set of rules. At step 406, a digital representation of the processed asset information is generated based on the type of user devices 122A-N. At step 408, the generated representation of the processed asset information is stored in a predefined file format. The predefined file format is compatible with a format used by the plurality of user devices 122A-N. For example, a predefined file format may be a Turtle (TTL) or n-triples (N3) serialization of RDF.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A method (400) for generating a digital representation of one or more assets (108A-N) in a cloud computing environment (100) comprising:
extracting, by a processor (202) of a cloud computing system (102) comprised in the cloud computing environment (100), asset information associated with the one or more assets (108A-N) from a plurality of structured and unstructured data sources (120A-N), wherein the one or more assets (108A-N) are deployed in an industrial environment (106) ;
processing, by the processor (202), the extracted asset information based on a first predefined set of rules comprising determining whether the extracted asset information meets a predefined requirement based on execution of one or more tests on the asset information and processing the asset information which is determined to meet the predefined requirement;
generating, by the processor (202), a digital representation of the processed asset information based on a type of user devices (122A-N); and
storing, by the processor (202), the generated representation of the processed asset information in a predefined file format in a database, wherein the predefined file format is compatible with a format used by the user devices (122A-N).

2. The method (400) according to claim 1, further comprising:
outputting the generated digital representation of the processed asset information on a user interface of the user devices (122A-N).

3. The method (400) according to claim 1, wherein extracting the asset information from the plurality of structured and unstructured data sources (120A-N) comprises:
receiving asset information from plurality of structured and unstructured data sources (120A-N);
identifying relevant asset information among the received asset information based on content of the asset information; and
extracting the identified relevant asset information.

4. The method (400) according to claim 1, further comprising:
discarding the asset information which fails to meet the predefined requirement from the database.

5. The method (400) according to claim 1 or 3, wherein processing the extracted asset information based on the first predefined set of rules comprises:
classifying the extracted asset information based on the content of the asset information and based on a second predefined set of rules; and
dynamically mapping the classified asset information with corresponding asset information extracted from other structured and unstructured data sources (120A-N).

6. The method (400) according to claim 5, wherein generating the digital representation of the processed asset information based on the type of user devices (122A-N) comprises:
generating a common data model based on the dynamically mapped asset information, wherein the common data model corresponds to a common file format compatible with the format used by the user devices (122A-N);
determining the type of user devices (122A-N) intended to receive the digital representation of the processed asset information; and
generating the digital representation of the processed asset information based on the generated common data model and based on the determined type of user devices (122A-N).

7. The method (400) according to one of claims 1 to 6, wherein generating the digital representation of the processed asset information based on the type of user devices (122A-N) comprises:
generating a graphical representation of the processed asset information based on the type of user devices (122A-N).

8. The method (400) according to claim 6, wherein generating the digital representation of the processed asset information based on the type of user devices (122A-N) comprises:
classifying the generated common data model into sub-common data models based on the classified asset information; and
generating one or more graphical representations of the processed asset information, wherein each of the one or more graphical representations corresponds to each of the sub-common data model.

9. The method (400) according to one of claims 1 to 8, wherein processing the extracted asset information based on the first predefined set of rules comprises:
determining one or more modifications made to the extracted asset information based on pre-stored asset information.

10. The method (400) according to claim 9, wherein generating the digital representation of the processed asset information based on the type of user devices (122A-N) comprises:
generating a part of the representation of the processed asset information based on the determined one or more modifications made to the asset information, wherein the part of representation corresponds to the modified part of the asset information.

11. The method (400) according to claim 1, further comprising:
performing one or more validity tests on the generated digital representation of the asset information; and
modifying the generated digital representation of the asset information based on the validation results.

12. A cloud computing system (102) comprising:
one or more processor(s) (202); and
a memory (204) coupled to the one or more processor (s) (202), wherein the memory (204) comprises a digital representation management module (112) stored in the form of machine-readable instructions executable by the one or more processor(s) (202), wherein the digital representation management module (112) is capable of performing a method according to any of the claims 1-11.

13. A cloud computing environment (100) comprising:
a cloud computing system (102) according to claim 12;
an industrial environment (106) comprising one or more assets (108A-N) capable of communicating asset information to the cloud computing system (102);
one or more structured and unstructured data sources (120A-N) capable of storing information associated with the one or more assets (108A-N) in one or more data format; and
at least one user device (122A-N) communicatively coupled to the cloud computing system (102) and the industrial environment (106) via the network (104).

14. A computer program product comprising machine-readable instructions stored therein that, when executed by one or more processors (202), cause the one or more processor (202) to perform a method according to any of the claims 1-11.

## Patentansprüche

1. Verfahren (400) zum Erzeugen einer digitalen Darstellung von einem oder mehreren Assets (108A-N) in einer Cloud-Computing-Umgebung (100), umfassend:
Extrahieren von Asset-Informationen, die dem einen oder mehreren Assets (108A-N) zugeordnet sind, aus einer Mehrzahl von strukturierten und unstrukturierten Datenquellen (120A-N) durch einen Prozessor (202) eines Cloud-Computing-Systems (102), das die Cloud-Computing-Umgebung (100) umfasst, wobei das eine oder mehrere Assets (108A-N) in einer industriellen Umgebung (106) eingesetzt werden;
Verarbeiten der extrahierten Asset-Informationen durch den Prozessor (202) basierend auf einem ersten vordefinierten Satz von Regeln, umfassend das Bestimmen, ob die extrahierten Asset-Informationen eine vordefinierte Anforderung erfüllen, basierend auf der Ausführung von einem oder mehreren Tests an den Asset-Informationen, und Verarbeiten der Asset-Informationen, von denen bestimmt wird, dass sie die vordefinierte Anforderung erfüllen;
Erzeugen, durch den Prozessor (202), einer digitalen Darstellung der verarbeiteten Asset-Informationen basierend auf einer Art von Benutzergeräten (122A-N); und
Speichern der erzeugten Darstellung der verarbeiteten Asset-Informationen in einem vordefinierten Dateiformat in einer Datenbank durch den Prozessor (202), wobei das vordefinierte Dateiformat mit einem von den Benutzergeräten (122A-N) verwendeten Format kompatibel ist.

2. Verfahren (400) nach Anspruch 1, ferner umfassend:
Ausgeben der erzeugten digitalen Darstellung der verarbeiteten Asset-Informationen auf einer Benutzeroberfläche der Benutzergeräte (122A-N).

3. Verfahren (400) nach Anspruch 1, wobei das Extrahieren der Asset-Informationen aus der Mehrzahl von strukturierten und unstrukturierten Datenquellen (120A-N) umfasst:
Empfangen von Asset-Informationen aus einer Mehrzahl von strukturierten und unstrukturierten Datenquellen (120A-N);
Identifizieren relevanter Asset-Informationen unter den empfangenen Asset-Informationen, basierend auf dem Inhalt der Asset-Informationen; und
Extrahieren der identifizierten relevanten Asset-Informationen.

4. Verfahren (400) nach Anspruch 1, ferner umfassend:
Verwerfen der Asset-Informationen, die den vordefinierten Anforderungen nicht entsprechen, aus der Datenbank.

5. Verfahren (400) nach Anspruch 1 oder 3, wobei das Verarbeiten der extrahierten Asset-Informationen basierend auf dem ersten vordefinierten Satz von Regeln umfasst:
Klassifizieren der extrahierten Asset-Informationen basierend auf dem Inhalt der Asset-Informationen und basierend auf einem zweiten vordefinierten Satz von Regeln; und
dynamisches Mappen der klassifizierten Asset-Informationen mit entsprechenden Asset-Informationen, die aus anderen strukturierten und unstrukturierten Datenquellen extrahiert wurden (120A-N).

6. Verfahren (400) nach Anspruch 5, wobei das Erzeugen der digitalen Darstellung der verarbeiteten Asset-Informationen basierend auf der Art der Benutzergeräte (122A-N) umfasst:
Erzeugen eines gemeinsamen Datenmodells basierend auf den dynamisch gemappten Asset-Informationen, wobei das gemeinsame Datenmodell einem gemeinsamen Dateiformat entspricht, das mit dem von den Benutzergeräten (122A-N) verwendeten Format kompatibel ist;
Bestimmen der Art der Benutzergeräte (122A-N), die dazu bestimmt sind, die digitale Darstellung der verarbeiteten Asset-Informationen zu empfangen; und
Erzeugen der digitalen Darstellung der verarbeiteten Asset-Informationen basierend auf dem erzeugten gemeinsamen Datenmodell und basierend auf der bestimmten Art von Benutzergeräten (122A-N).

7. Verfahren (400) nach einem der Ansprüche 1 bis 6, wobei das Erzeugen der digitalen Darstellung der verarbeiteten Asset-Informationen basierend auf der Art der Benutzergeräte (122A-N) umfasst:
Erzeugen einer grafischen Darstellung der verarbeiteten Asset-Informationen basierend auf der Art der Benutzergeräte (122A-N).

8. Verfahren (400) nach Anspruch 6, wobei das Erzeugen der digitalen Darstellung der verarbeiteten Asset-Informationen basierend auf der Art der Benutzergeräte (122A-N) umfasst:
Klassifizieren des erzeugten gemeinsamen Datenmodells in subgemeinsame Datenmodelle basierend auf den klassifizierten Asset-Informationen; und
Erzeugen einer oder mehrerer grafischer Darstellungen der verarbeiteten Asset-Informationen, wobei jede der einen oder mehreren grafischen Darstellungen jedem der sub-gemeinsamen Datenmodelle entspricht.

9. Verfahren (400) nach einem der Ansprüche 1 bis 8, wobei das Verarbeiten der extrahierten Asset-Informationen basierend auf dem ersten vordefinierten Satz von Regeln umfasst:
Bestimmen einer oder mehrerer Modifikationen, die an den extrahierten Asset-Informationen basierend auf vorab gespeicherten Asset-Informationen vorgenommen wurden.

10. Verfahren (400) nach Anspruch 9, wobei das Erzeugen der digitalen Darstellung der verarbeiteten Asset-Informationen basierend auf der Art der Benutzergeräte (122A-N) umfasst:
Erzeugen eines Teils der Darstellung der verarbeiteten Asset-Informationen basierend auf der bestimmten einen oder mehreren an den Asset-Informationen vorgenommenen Modifikationen, wobei der Teil der Darstellung dem modifizierten Teil der Asset-Informationen entspricht.

11. Verfahren (400) nach Anspruch 1, ferner umfassend:
Durchführen eines oder mehrerer Gültigkeitstests an der erzeugten digitalen Darstellung der Asset-Informationen; und
Modifizieren der erzeugten digitalen Darstellung der Asset-Informationen basierend auf den Validierungsergebnissen.

12. Cloud-Rechensystem (102), umfassend:
einen oder mehrere Prozessor(en) (202); und
einen Speicher (204), der mit dem einen oder mehreren Prozessor(en) (202) gekoppelt ist, wobei der Speicher (204) ein digitales Darstellungs-Verwaltungsmodul (112) umfasst, das in Form von maschinenlesbaren Anweisungen gespeichert ist, die von dem einen oder mehreren Prozessor(en) (2 02) ausführbar sind, wobei das digitale Darstellungs-Verwaltungsmodul (112) zum Durchführen eines Verfahrens nach einem der Ansprüche 1-11 in der Lage ist.

13. Cloud-Rechenumgebung (100), umfassend:
ein Cloud-Rechensystem (102) nach Anspruch 12;
eine industrielle Umgebung (106), die ein oder mehrere Assets (108A-N) umfasst, die zum Kommunizieren von Asset-Informationen an das Cloud-Rechensystem (102) in der Lage sind;
eine oder mehrere strukturierte und unstrukturierte Datenquellen (120AN), die zum Speichern von Informationen, die dem einen oder mehreren Assets (108A-N) zugeordnet sind, in einem oder mehreren Datenformaten in der Lage sind; und
mindestens ein Benutzergerät (122A-N), das kommunikativ über das Netzwerk (104) mit dem Cloud-Rechensystem (102) und der industriellen Umgebung (106) gekoppelt ist.

14. Computerprogrammprodukt, das maschinenlesbare, darin gespeicherte Anweisungen umfasst, die, wenn sie von einem oder mehreren Prozessoren (202) ausgeführt werden, den einen oder mehrere Prozessoren (202) veranlassen, ein Verfahren nach einem der Ansprüche 1-11 durchzuführen.

## Revendications

1. Procédé (400) de génération d'une représentation numérique d'un ou de plusieurs actifs (108A-N) dans un environnement d'informatique en nuage (100) comprenant:
l'extraction, par un processeur (202) d'un système d'informatique en nuage (102) compris dans l'environnement d'informatique en nuage (100), d'informations d'actifs associées à un ou plusieurs actifs (108A-N) à partir d'une pluralité de sources de données structurées et non structurées (120A-N), dans lequel les un ou plusieurs actifs (108A-N) sont déployés dans un environnement industriel (106);
le traitement, par le processeur (202), des informations d'actifs extraites en fonction d'un premier ensemble prédéfini de règles comprenant la détermination que les informations d'actifs extraites satisfont une exigence prédéfinie suite à l'exécution d'un ou plusieurs tests sur les informations d'actifs et le traitement des informations d'actifs déterminées comme satisfaisant l'exigence prédéfinie;
la génération, par le processeur(202), d'une représentation des informations d'actifs traitées en fonction d'un type de dispositifs utilisateurs (122A-N); et
le stockage, par le processeur (202), de la représentation générée des informations d'actifs traitées dans un format de fichier prédéfini dans une base de données, dans lequel le format de fichier prédéfini est compatible avec un format utilisé par les dispositifs utilisateurs (122A-N).

2. Procédé (400) selon la revendication 1, comprenant en outre:
la délivrance de la représentation numérique générée des informations d'actifs traitées sur une interface utilisateur des dispositifs utilisateurs (122AN).

3. Procédé (400) selon la revendication 1, dans lequel l'extraction des informations d'actifs à partir de la pluralité de sources de données structurées et non structurées (120A-N) comprend:
la réception d'informations d'actifs à partir d'une pluralité de sources de données structurées et non structurées (120A-N);
l'identification d'informations d'actifs pertinentes parmi les informations d'actifs reçues en fonction du contenu des informations d'actifs; et
l'extraction des informations d'actifs pertinentes identifiées.

4. Procédé (400) selon la revendication 1, comprenant en outre:
le rejet de la base de données des informations d'actifs qui ne satisfont pas l'exigence prédéfinie.

5. Procédé (400) selon la revendication 1 ou 3, dans lequel le traitement des informations d'actifs extraites en fonction du premier ensemble prédéfini de règles comprend:
la classification des informations d'actifs extraites en fonction du contenu des informations d'actifs et en fonction d'un second ensemble prédéfini de règles; et
le mappage dynamique des informations d'actifs classifiées avec des informations d'actifs extraites correspondantes provenant d'autres sources de données structurées et non structurées (120A-N).

6. Procédé (400) selon la revendication 5, dans lequel la génération de la représentation numérique des informations d'actifs traitées en fonction du type de dispositifs utilisateurs (122A-N) comprend:
la génération d'un modèle de données commun en fonction des informations d'actifs mappées dynamiquement, dans lequel le modèle de données commun correspond à un format de fichier commun compatible avec le format utilisé par les dispositifs utilisateurs (122A-N);
la détermination du type de dispositifs utilisateurs (122A-N) destiné à recevoir la représentation numérique des informations d'actifs traitées; et
la génération de la représentation numérique des informations d'actifs traitées en fonction du modèle de données commun généré et du type déterminé de dispositifs utilisateurs (122A-N).

7. Procédé (400) selon l'une des revendications 1 à 6, dans lequel la génération de la représentation numérique des informations d'actifs traitées en fonction du type de dispositifs utilisateurs (122A-N) comprend:
la génération d'une représentation graphique des informations d'actifs traitées en fonction du type de dispositifs utilisateurs (122 A-N).

8. Procédé (400) selon la revendication 6, dans lequel la génération de la représentation numérique des informations d'actifs traitées en fonction du type de dispositifs utilisateurs (122A-N) comprend:
la classification du modèle de données commun généré en sous-modèles de données communs en fonction des informations d'actifs classifiées; et
la génération d'une ou plusieurs représentations graphiques des informations d'actifs traitées, dans lequel chacune des représentations graphiques correspond à chacun des sous-modèles de données communs.

9. Procédé (400) selon l'une des revendications 1 à 8, dans lequel le traitement des informations d'actifs extraites en fonction du premier ensemble prédéfini de règles comprend:
la détermination d'une ou plusieurs modifications apportées aux informations d'actifs extraites en fonction des informations d'actifs préstockées.

10. Procédé (400) selon la revendication 9, dans lequel la génération de la représentation numérique des informations d'actifs traitées en fonction du type de dispositifs utilisateurs (122A-N) comprend:
la génération d'une partie de la représentation des informations d'actifs traitées en fonction des une ou plusieurs modifications déterminées apportées aux informations d'actifs, dans lequel la partie de la représentation correspond à la partie modifiée des informations d'actifs.

11. Procédé (400) selon la revendication 1, comprenant en outre:
la réalisation d'un ou plusieurs tests de validité sur la représentation numérique générée des informations d'actifs; et
la modification de la représentation numérique générée des informations d'actifs en fonction des résultats de validation.

12. Système d'informatique en nuage (102) comprenant:
un ou plusieurs processeur(s) (202); et
une mémoire (204) couplée aux un ou plusieurs processeurs (202), dans lequel la mémoire (204) comprend un module de gestion de représentation numérique (112) stocké sous forme d'instructions lisibles par machine exécutables par les un ou plusieurs processeurs (202), dans lequel le module de gestion de représentation numérique (112) est capable de réaliser un procédé selon l'une quelconque des revendications 1 à 11.

13. Environnement d'informatique en nuage (100) comprenant:
un système d'informatique en nuage (102) selon la revendication 12;
un environnement industriel (106) comprenant un ou plusieurs actifs (108A-N) capables de communiquer des informations d'actifs au système d'informatique en nuage (102);
une ou plusieurs sources de données structurées et non structurées (120A-N) capables de stocker des informations associées aux un ou plusieurs actifs (108A-N) dans un ou plusieurs formats de données; et
au moins un dispositif utilisateur (122A-N) couplé en communications avec le système d'informatique en nuage (102) et l'environnement industriel (106) par l'intermédiaire du réseau (104).

14. Produit de gramme d'ordinateur dans lequel sont stockées des instructions lisibles par machine qui, à leur exécution par les un ou plusieurs processeurs (202), amènent les un ou plusieurs processeurs (202) à réaliser un procédé selon l'une quelconque des revendications 1 à 11.
